**Europäisches Patentamt**

**European Patent Office**

**Office européen des brevets**

(11) Veröffentlichungsnummer : **0 480 905 A1**

## (12) EUROPÄISCHE PATENTANMELDUNG

(21) Anmeldenummer : **91890230.5**

(22) Anmeldetag : **01.10.91**

(51) Int. Cl.$^5$ : **B22D 19/04,** H01M 2/28, B22D 39/02

(30) Priorität : **08.10.90 AT 2026/90**

(43) Veröffentlichungstag der Anmeldung : **15.04.92 Patentblatt 92/16**

(84) Benannte Vertragsstaaten : **AT BE CH DE DK ES FR GB GR IT LI LU NL SE**

(71) Anmelder : **Akkumulatorenfabrik Dr. Leopold Jungfer A-9181 Feistritz im Rosental (AT)**

(72) Erfinder : **Malle, Manfred, Ing. Tösching Nr. 8 A-9184 St. Jakob/Rosental (AT)**

(74) Vertreter : **Holzer, Walter, Dipl.-Ing. et al Patentanwälte, Dipl.-Ing. Dr. techn. Schütz Alfred, Dipl.-Ing. Holzer Walter, Dipl.-Ing. Pfeifer Otto, Gustinus-Ambrosi-Strasse 1-3 A-8042 Raaba (AT)**

(54) **Vorrichtung zum volumendosierten Giessen einer Bleischmelze für Pole bzw. Polbrücken von Akkumulatorplattensätzen.**

(57) Vorrichtung zum volumendosierten Gießen einer Bleischmelze in eine Form für Pole bzw. Polbrücken von Akkumulatorplattensätzen, mit zumindest einem Schöpfgefäß (1), das auf einer horizontalen Achse (2) montiert ist, wobei die Achse an einem Träger (3) zwischen einer Schöpf-und Bereitschaftsstellung des Schöpfgefäßes und einer Gießstellung verdrehbar gelagert ist, und wobei der Träger (3) an einem Gestell (4) zwischen einer Stellung, in der das Schöpfgefäß (1, 1') in einen Schmelzebehälter (5) eintaucht, und einer Stellung, in der das Schöpfgefäß oberhalb einer Gießform (6) liegt, verschiebbar ist.

Fig.1

Die Erfindung betrifft eine Vorrichtung zum volumendosierten Gießen einer Bleischmelze in eine Form für Pole bzw. Polbrücken von Akkumulatorplattensätzen.

Bleiakkumulatoren bestehen je nach der geforderten Betriebsspannung aus mehreren, in Serie geschalteten Zellen, von denen jede eine Betriebsspannung von etwa 2 V liefert. Herkömmliche Starterbatterien mit einer Spannung von 12 V besitzen daher sechs Zellen. In jeder dieser Zellen befinden sich ein oder mehrere Plattenpaare, deren Platten durch Scheider elektrisch voneinander getrennt sind (positive und negative Einzelplatten). Ist in einer Zelle ein Satz aus mehreren Plattenpaaren vorhanden, so werden alle Platten gleicher Polarität des Plattensatzes durch eine elektrisch leitende Polbrücke miteinander verbunden.

Ursprünglich wurden diese Polbrücken durch händisches Aufbringen von geschmolzenem Blei bzw. einer Bleilegierung in entsprechende Lehren hergestellt. Mit der Automatisierung der Batterieherstellung wurden verschiedene Systeme zum Einbringen von flüssigem Blei in die Teilformen einzelner Plattensätze entwickelt. Die erforderliche Menge an Bleischmelze kann dabei für die einzelnen Satzverbinder unterschiedlich groß sein. Für Plattensätze mit unterschiedlicher Plattenpaaranzahl, wie sie bei der Fertigung von Batterietypen mit unterschiedlicher Ah-Kapazität vorkommen, ist natürlich eine unterschiedliche Dosierung der Bleischmelze erforderlich.

Bei allen bisher bekannten Dosiersystemen erfolgt die Dosierung der benötigten Bleischmelze durch Regelung der Ausfließzeit einer in einer Schmelzwanne vorrätig gehaltenen größeren Menge an geschmolzener Bleilegierung mit der gewünschten Zusammensetzung. Diese Regelung ist zeitgesteuert, d.h. es wird für jede Form eine bestimmte Ausfließzeit aus einer Anzahl von Ausfließöffnungen vorgegeben; für eine 12 V-Batterie mit sechs Plattensätzen sind beispielsweise sechs Ausfließöffnungen für die Pluspolbrücken und sechs Ausfließöffnungen für die Minuspolbrücken vorhanden.

Die bisher bekannten Maßnahmen und Vorrichtungen ermöglichen Jedoch keine gleichmäßige Ausbildung der Polbrücken. Die Erfindung zielt darauf ab, eine Vorrichtung zum volumendosierten Gießen einer Schmelze in eine Gießform zu schaffen, die es bei einfacher Konstruktion mit geringem Zeit- und Personalaufwand gestattet, völlig gleichmäßige Polverbinderbrücken herzustellen. Die erfindungsgemäße Vorrichtung zeichnet sich dadurch aus, daß zumindest ein Schöpfgefäß auf einer horizontalen Achse montiert ist, wobei die Achse an einem Träger zwischen einer Schöpf- und Bereitschaftsstellung des Schöpfgefäßes und einer Gießstellung verdrehbar gelagert ist, und daß der Träger an einem Gestell zwischen einer Stellung, in der das Schöpfgefäß in einen Schmelzebehälter eintaucht, und einer Stellung, in der das Schöpfgefäß oberhalb einer Gießform liegt, verschiebbar ist.

Diese Vorrichtung hat konstruktiv einfachen Aufbau und einfache Arbeitsweise, besitzt nur eine geringe Anzahl von bewegten Teilen, unterliegt daher keinem nennenswerten Verschleiß und ist mit geringem Zeitaufwand von einer Akkumulatortype auf die andere umrüstbar. Insbesondere ermöglicht es die erfindungsgemäße Vorrichtung, Akkumulatoren herzustellen, deren angegossene Polverbinderbrücken völlig gleichmäßigen Querschnitt haben, so daß die Akkumulatoren nicht nur untereinander gleichmäßige elektrische Leistung haben, sondern auch was die Leistungsergebnisse zwischen den einzelnen Zellen betrifft, größere Gleichmäßigkeit aufweisen.

In vorteilhafter Ausgestaltung der Erfindung ist das Schöpfgefäß um die Drehachse der Achse einstellbar an dieser befestigt. Auf diese Weise kann durch einfache Voreinstellung der Neigung des Schöpfgefäßes das Gießvolumen verändert werden. Insbesondere ist es vorteilhaft, wenn mehrere Schöpfgefäße mit gegenseitigem Abstand an der Achse angeordnet sind, wobei die den zu gießenden Polbrücken zugeordneten Schöpfgefäße an der Achse festgelegt und die den zu gießenden Polen zugeordneten Schöpfgefäße an der Achse einstellbar befestigt sind. Dadurch kann das Volumen der Endpole in Bezug zum Volumen der Polbrücken stufenlos verstellt werden.

Gemäß einer bevorzugten Ausführungsform der Vorrichtung trägt die Achse einen Kurbelarm, über den sie mittels eines am Träger angelenkten Betätigungszylinders verdrehbar ist. Dies stellt eine einfache und sichere Lösung zur Betätigung der Achse dar. Es ist dabei besonders günstig, wenn der Hub des Betätigungszylinders voreinstellbar ist, da dadurch das Gießvolumen für alle Schöpfgefäße gemeinsam verändert werden kann.

Nach einem weiteren Merkmal der Erfindung ist der Träger mittels eines am Gestell angelenkten Betätigungszylinders parallel zu sich selbst schräg verschiebbar, was ebenfalls eine kostengünstige und betriebssichere Lösung darstellt.

Die Erfindung ermöglicht eine Pol- bzw. Verbinderqualität, wie sie in der Praxis bisher unerreicht ist. Insbesondere kann die zu dosierende Bleimenge ab etwa 20 g mit einer Genauigkeit von ± 3 g stufenlos eingestellt werden.

Die Erfindung wird nachfolgend an einem Ausführungsbeispiel unter Bezugnahme auf die Zeichnungen näher erläutert. Es zeigen:

Fig. 1 eine schematische Seitenansicht einer Vorrichtung gemäß der Erfindung.

Die Fig. 2 bis 4 ausschnittsweise die Vorrichtung nach Fig. 1 in verschiedenen Gießstadien,
die Fig. 5 und 6 ein Schöpfgefäß zum Gießen einer Polbrücke in Seitenansicht und in Draufsicht,
die Fig. 7 und 8 ein Schöpfgefäß zum Gießen eines Endpoles in Seitenansicht und in Draufsicht, und
Fig. 9 eine Stirnansicht der Vorrichtung nach Fig. 1, in der die Schöpfgefäße nur ihrer Lage nach angedeutet
sind.

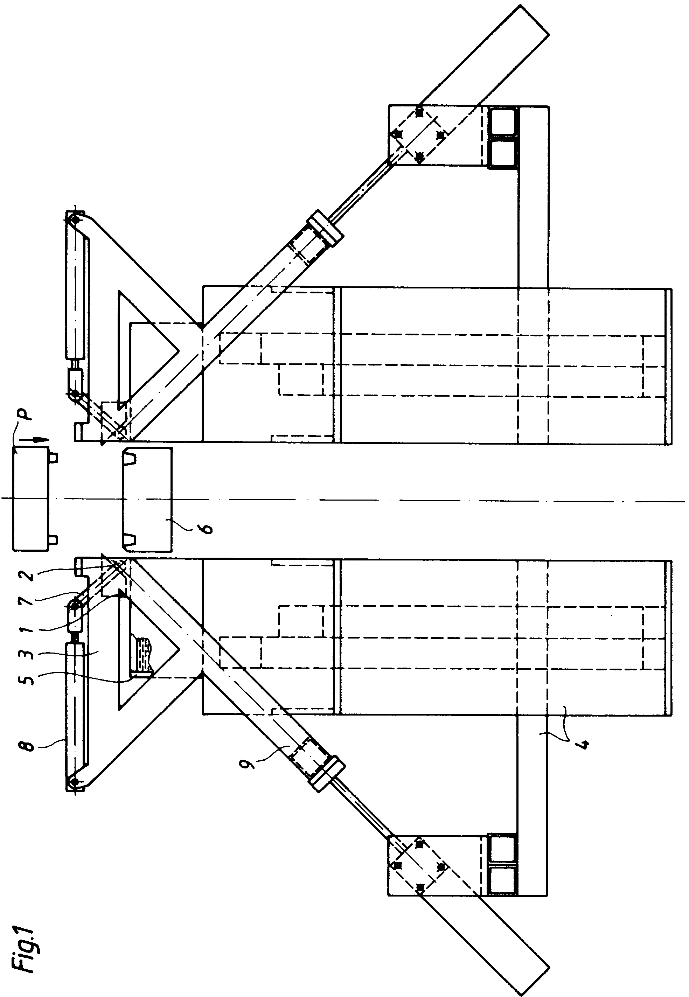

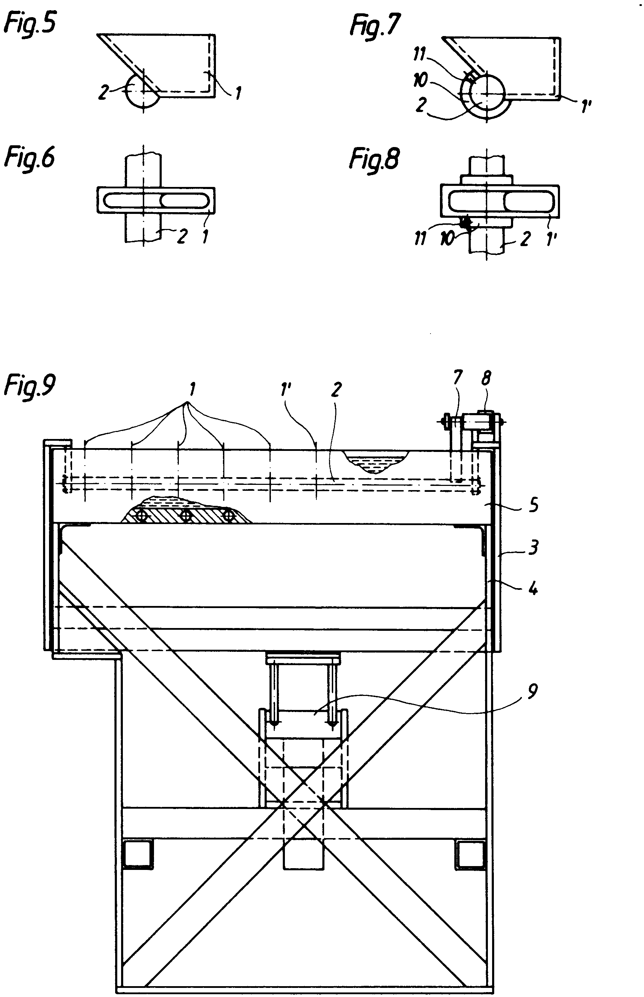

Gemäß Fig. 1 und Fig. 9 sind zu beiden Längsseiten von Plattensätzen P Schöpfgefäße 1 an je einer horizontalen Achse 2 befestigt. Jede Achse 2 ist an einem Träger 3 gelagert und zwischen einer Bereitschaftsstellung und einer Gießstellung verdrehbar. Der Träger 3 ist seinerseits in einem Gestell 4 zwischen einer Stellung, in welcher das Schöpfgefäß 1 in einen Schmelzebehälter 5 eintaucht, und der Bereitschaftsstellung oberhalb einer Gießform 6 schräg verschiebbar.

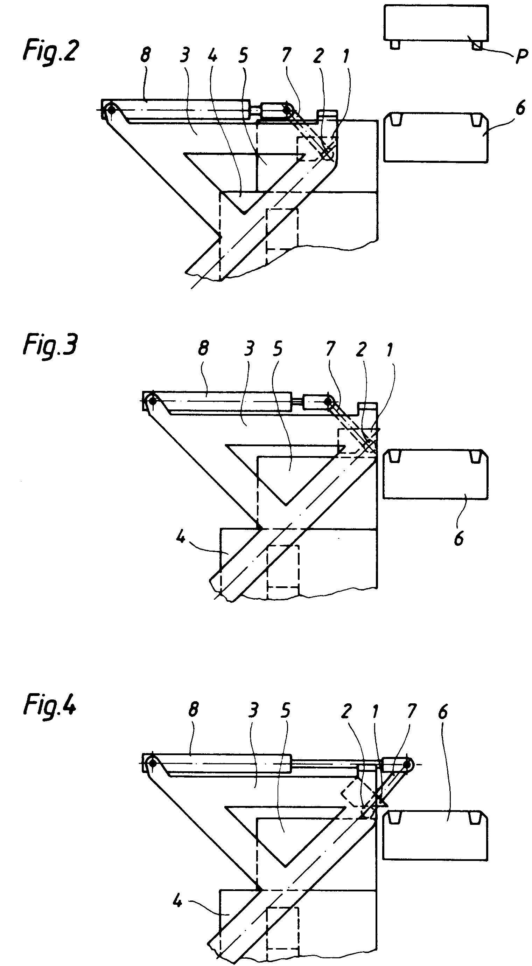

Wie die Fig. 2 bis 4 zeigen, ist jedes Schöpfgefäß 1 an der Achse 2 drehfest festgelegt. Die Achse 2 trägt einen Kurbelarm 7, über den sie mittels eines am Träger 3 angelenkten Betätigungszylinders 8, z.B. eines Pneumatikzylinders, verdrehbar ist. Der Hub des Betätigungszylinders 8 ist z.B. durch (nicht dargestellte) verschiebbare justierbare Anschläge einstellbar, so daß die Anfangsstellung und der Drehwinkel der Achse 2 und damit der Füllstand der Schöpfgefäße 1 beim Schöpfen und Ausgießen und daher letztlich das Gießvolumen für alle Schöpfgefäße 1 gemeinsam voreinstellbar ist.

Der Träger 3 ist mittels eines am Gestell 4 angelenkten Betätigungszylinders 9, z.B. eines Pneumatikzylinders, parallel zu sich selbst schräg verschiebbar. Dadurch wird erreicht, daß die Schöpfgefäße 1 in der Anfangsphase eines Gießzyklus vollständig in ein auf etwa 500° C erwärmtes Bleibad im Schmelzebehälter 5 eingetaucht sind (Fig. 2). Sobald die zu verarbeitenden Plattensätze P vorpositioniert sind, fahren die Schöpfgefäße 1 unter Betätigung des Pneumatikzylinders 9 unter 45° aus dem Schmelzebehälter 5 heraus in Richtung auf die Gießkokillen in der Gießform 6 (Fig. 3). Die Endstellung des Zylinderhubes wird elektromagnetisch abgetastet und schaltet den Gießvorgang der Schöpfgefäße 1 ein, der von dem Pneumatikzylinder 8 bewerkstelligt wird (Fig. 4). Mit dem Erreichen der vorderen Position der Schöpfgefäße 1 werden diese wieder in die Ausgangsstellung in den Schmelzebehälter 5 zurückversetzt (Fig. 2) und zugleich tauchen die vorpositionierten Plattensätze P in die nun mit ca. 500° C warmem Blei gefüllten Gießkokillen ein. Die Schöpfgefäße 1 tauchen wieder in den Schmelzebehälter 5 ein. Der Gießzyklus ist damit beendet und nach Abkühlen der an die Plattensätze P angegossenen Pole bzw. Polbrücken und Entformen des auf diese Weise gebildeten Akkumulator-Plattensatzes kann ein weiterer Gießzyklus beginnen.

Die Fig. 5 und 6 zeigen ein Schöpfgefäß 1 zum Gießen einer Polbrücke, das mit der Achse 2 fest verbunden, z.B. mit einem abgeschrägten Abschnitt der Welle 2 verschweißt, ist. Die Fig. 7 und 8 zeigen ein abgewandeltes Schöpfgefäß 1′ zum Gießen eines Endpoles, das ein größeres Fassungsvermögen aufweist als das Schöpfgefäß nach Fig. 5 und 6. Das Endpol-Schöpfgefäß 1′ ist über eine Schelle 10 auf der Achse 2 verdrehbar gelagert und mittels einer Klemmschraube 11 fixierbar. Auf diese Weise sind die Schöpfgefäße 1′ relativ zu den Schöpfgefäßen 1 verstellbar. Das Gießvolumen zum Gießen der Endpole des Akkumulators kann somit unabhängig vom Gießvolumen zum Gießen der die einzelnen Plattensätzen des Akkumulators verbindenden Polbrücken voreingestellt werden.

## Patentansprüche

1. Vorrichtung zum volumendosierten Gießen einer Bleischmelze in eine Form für Pole bzw. Polbrücken von Akkumulatorplattensätzen, dadurch gekennzeichnet, daß zumindest ein Schöpfgefäß (1) auf einer horizontalen Achse (2) montiert ist, wobei die Achse an einem Träger (3) zwischen einer Schöpf- und Bereitschaftsstellung des Schöpfgefäßes und einer Gießstellung verdrehbar gelagert ist, und daß der Träger (3) an einem Gestell (4) zwischen einer Stellung, in der das Schöpfgefäß (1, 1′) in einen Schmelzebehälter (5) eintaucht, und einer Stellung, in der das Schöpfgefäß oberhalb einer Gießform (6) liegt, verschiebbar ist.

2. Vorrichtung nach Anspruch 1, dadurch gekennzeichnet, daß das Schöpfgefäß (1′) um die Drehachse der Achse (2) einstellbar an dieser befestigt ist.

3. Vorrichtung nach Anspruch 2, dadurch gekennzeichnet, daß mehrere Schöpfgefäße (1, 1′) mit gegenseitigem Abstand an der Achse (2) angeordnet sind, wobei die den zu gießenden Polbrücken zugeordneten Schöpfgefäße (1) an der Achse (2) festgelegt und die den zu gießenden Polen zugeordneten Schöpfgefäße (1′) an der Achse (2) einstellbar befestigt sind.

4. Vorrichtung nach einem der Ansprüche 1 bis 3, dadurch gekennzeichnet, daß die Achse (2) einen Kurbelarm (7) trägt, über den sie mittels eines am Träger (3) angelenkten Betätigungszylinders (8) verdrehbar ist.

5. Vorrichtung nach Anspruch 4, dadurch gekennzeichnet, daß der Hub des Betätigungszylinders (8) voreinstellbar ist.

6. Vorrichtung nach einem der Ansprüche 1 bis 5, dadurch gekennzeichnet, daß der Träger (3) mittels eines am Gestell (4) angelenkten Betätigungszylinders (9) parallel zu sich selbst schräg verschiebbar ist.

*Fig.1*

EP 0 480 905 A1

Fig.2

Fig.3

Fig.4

Fig.5

Fig.7

Fig.6

Fig.8

Fig.9

**Europäisches Patentamt**

## EUROPÄISCHER RECHERCHENBERICHT

Nummer der Anmeldung

| | EINSCHLÄGIGE DOKUMENTE | | EP 91890230.5 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | GB - A - 2 120 144 (GNB BATTERIES INC.) * Abstract; Ansprüche 1,2 * -- | 1 | B 22 D 19/04 H 01 M 2/28 B 22 D 39/02 |
| A | DE - A - 2 813 103 (SCHMITZ & APPELT) * Fig. 1-3 * -- | 1,2,4 | |
| A | EP - A - 0 250 830 (VARTA) ---- | | |
| | | | **RECHERCHIERTE SACHGEBIETE (Int Cl⁵)** |
| | | | B 22 D 19/00 B 22 D 25/00 H 01 M 2/00 B 22 D 39/00 |

Der vorliegende Recherchenbericht wurde für alle Patentansprüche erstellt.

| Recherchenort | Abschlußdatum der Recherche | Prüfer |
|---|---|---|
| WIEN | 03-12-1991 | RIEDER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82